(19) **Europäisches Patentamt / European Patent Office / Office européen des brevets**

(11) **EP 3 051 224 B1**

(12) **EUROPEAN PATENT SPECIFICATION**

(45) Date of publication and mention
of the grant of the patent:
**08.08.2018 Bulletin 2018/32**

(21) Application number: **13894082.0**

(22) Date of filing: **27.09.2013**

(51) Int Cl.:
*F25B 1/00* (2006.01)   *F24H 9/20* (2006.01)
*F24H 4/02* (2006.01)   *F25B 49/02* (2006.01)

(86) International application number:
**PCT/JP2013/076344**

(87) International publication number:
**WO 2015/045116 (02.04.2015 Gazette 2015/13)**

(54) **REFRIGERATION CYCLE DEVICE**

KÄLTEKREISLAUFVORRICHTUNG

DISPOSITIF À CYCLE DE RÉFRIGÉRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.08.2016 Bulletin 2016/31**

(73) Proprietor: **Mitsubishi Electric Corporation
Tokyo 100-8310 (JP)**

(72) Inventors:
• **YANACHI, Satoru
Tokyo 100-8310 (JP)**
• **KATO, Yohei
Tokyo 100-8310 (JP)**
• **OBAYASHI, Tomoyoshi
Tokyo 100-8310 (JP)**

(74) Representative: **Pfenning, Meinig & Partner mbB
Patent- und Rechtsanwälte
Theresienhöhe 11a
80339 München (DE)**

(56) References cited:
EP-A1- 2 009 370   JP-A- 2002 310 497
JP-A- 2004 226 036   JP-A- 2004 226 036
JP-A- 2008 304 134   JP-A- 2008 304 134

**Description**

Technical Field

The present invention relates to a refrigeration cycle device.

Background Art

A heat pump hot water supply device that absorbs heat from outside air to heat water is widely used. In the heat pump hot water supply device, refrigerant pressure on a high pressure side of a refrigerant circuit is likely to increase when an outside air temperature is high, when a feed-water temperature is high, or both of the temperatures are high. Thus, the heat pump hot water supply device needs to control an operating state so that high pressure side refrigerant pressure does not exceed allowable pressure of the refrigerant circuit when the high pressure side refrigerant pressure is likely to increase. Although allowable pressure of the refrigerant circuit may be increased, strength and sealing tightness of each component need to be increased, which increases cost and weight. Thus, there is a limit to increase allowable pressure of the refrigerant circuit.

Japanese Patent Laid-Open No. 2007-155157, that is, Patent Literature 1 discloses a heat pump hot water supply device that includes a discharge pressure sensor for detecting discharge refrigerant pressure of a compressor, and performs control to open a throttling device if the discharge refrigerant pressure detected by the discharge pressure sensor is a set value or more.

JP 2008 304134 A discloses a heat pump device according to the preamble of claim 1. The heat pump device controls refrigerant enthalpy in the same as the heating medium inlet temperature, the heating medium outlet temperature regulated by a heating medium use temperature setting means, a refrigerant pressure arithmetic operation means becoming maximum in an enthalpy difference with the same refrigerant enthalpy, and a rotating speed of a compressor so as to become high pressure not less than its refrigerant pressure and not more than preset high pressure.

Citation List

Patent Literature

Patent Literature 1: Japanese Patent Laid-Open No. 2007-155157
Patent Literature 2: Japanese Patent Laid-Open No. 2005-127588
Patent Literature 3: Japanese Patent Laid-Open No. 2003-222396
Patent Literature 4: Japanese Patent Laid-Open No. 2009-8308
Patent Literature 5: Japanese Patent Laid-Open No. 2010-169350
Patent Literature 6: Japanese Patent Laid-Open No. 2012-184858

Summary of Invention

Technical Problem

The heat pump hot water supply device disclosed in the above literature can increase an opening of an expansion valve to reduce high pressure side refrigerant pressure when the discharge refrigerant pressure of the compressor, that is, the high pressure side refrigerant pressure is not less than a set value. However, increasing the opening of the expansion valve reduces a temperature of a refrigerant discharged from the compressor, which reduces output hot water temperature.

Another method of reducing high pressure side refrigerant pressure is a method of reducing a rotational speed of a compressor to reduce a refrigerant compressing capacity of the compressor and reduce the high pressure side refrigerant pressure. However, reducing the refrigerant compressing capacity of the compressor reduces a heating power of a heat pump, that is, a power of heating a heat medium per unit time [kW].

The present invention is achieved to solve the problems described above, and has an object to provide a refrigeration cycle device capable of curbing an increase in high pressure side refrigerant pressure while preventing a decline in heating temperature and heating power of a heat medium.

Solution to Problem

The object of the present invention is solved by claim 1. Advantageous embodiments are described by the dependent claims.

A refrigeration cycle device of the invention includes: a compressor configured to compress refrigerant; a high temperature side heat exchanger configured to exchange heat between the refrigerant compressed by the compressor and a heat medium; an expansion unit configured to expand the refrigerant having passed through the high temperature side heat exchanger; a low temperature side heat exchanger configured to exchange heat between the refrigerant having passed through the expansion unit and a fluid; and a feeding unit configured to feed the fluid to the low temperature side heat exchanger. The refrigeration cycle device further comprises control means for controlling an operation of the feeding unit so that an actual operating state approaches a target operating state of a refrigeration cycle. High pressure side refrigerant pressure is refrigerant pressure after compression by the compressor. Low pressure side refrigerant pressure is refrigerant pressure before compression by the compressor. The target operating state is an operating state in which the high pressure side refrigerant pressure is minimized when the low pressure side refrigerant pressure is changed with a refrigerant compressing capacity of the compressor kept constant.

Advantageous Effect of Invention

The refrigeration cycle device according to the present invention can curb an increase in high pressure side refrigerant pressure while preventing a decline in heating temperature and heating power of a heat medium.

Brief Description of Drawings

Figure 1 is a configuration diagram of a refrigeration cycle device according to embodiment 1 of the present invention.
Figure 2 shows a relationship among a low pressure side refrigerant pressure, a high pressure side refrigerant pressure, and a refrigerant compressing capacity of a compressor in the refrigeration cycle device according to embodiment 1 of the present invention.
Figure 3 shows a relationship among the low pressure side refrigerant pressure, the high pressure side refrigerant pressure, and the refrigerant compressing capacity of the compressor in the refrigeration cycle device according to embodiment 1 of the present invention.
Figure 4 is a flowchart showing a process of a controller controlling an operation of a blower in embodiment 1 of the present invention.
Figure 5 is a configuration diagram of a refrigeration cycle device according to embodiment 2 of the present invention.
Figure 6 is a table schematically showing a relationship stored in a controller in the refrigeration cycle device according to embodiment 2 of the present invention.
Figure 7 is a flowchart showing a process of the controller controlling an operation of a blower in embodiment 2 of the present invention.
Figure 8 shows a relationship among a low pressure side refrigerant pressure, a high pressure side refrigerant pressure, and a refrigerant compressing capacity of a compressor in the refrigeration cycle device according to embodiment 3 of the present invention.
Figure 9 is a flowchart showing a process of a controller controlling an operation of a blower in embodiment 3 of the present invention.
Figure 10 is a configuration diagram of a refrigeration cycle device according to embodiment 4 of the present invention.
Figure 11 is a table schematically showing a relationship stored in a controller in the refrigeration cycle device according to embodiment 4 of the present invention.
Figure 12 is a flowchart showing a process of the controller controlling an operation of a blower in embodiment 4 of the present invention.
Figure 13 is a configuration diagram of a refrigeration cycle device according to embodiment 5 of the present invention.
Figure 14 is a flowchart showing a process of a controller controlling an operation of a blower in embodiment 5 of the present invention.

Description of Embodiments

Now, with reference to the drawings, embodiments of the present invention will be described. Throughout the drawings, like components are denoted by like reference numerals, and overlapping descriptions will be omitted. The present invention includes any combinations of embodiments described below.

Embodiment 1

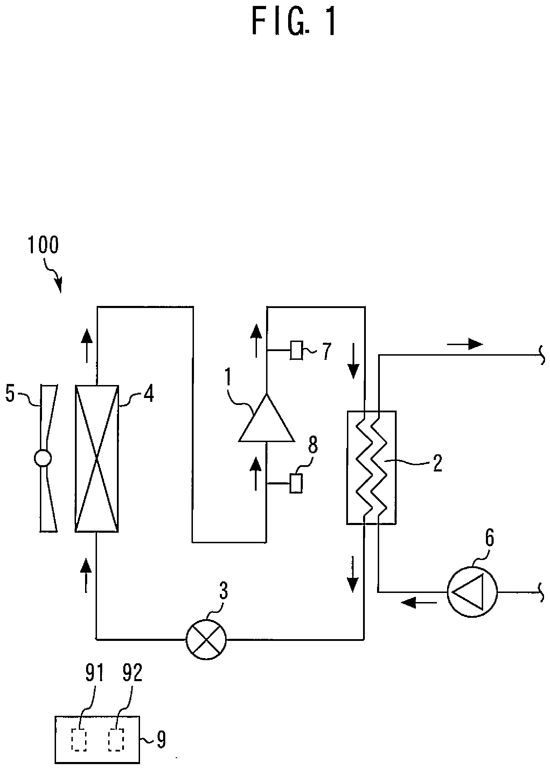

Figure 1 is a configuration diagram of a refrigeration cycle device according to embodiment 1 of the present invention. The refrigeration cycle device 100 of this embodiment 1 shown in Figure 1 is used as a heat pump hot water supply device. Hot water generated by the refrigeration cycle device 100 may be supplied to a side of a user who uses the hot water, or used as a heat source for air conditioning. The refrigeration cycle device 100 includes a compressor 1 for compressing a refrigerant, a high temperature side heat exchanger 2, an expansion valve 3, a low temperature side heat exchanger 4, a blower 5, a pump 6, a high pressure sensor 7, a low pressure sensor 8, and a controller 9.

The compressor 1, the high temperature side heat exchanger 2, the expansion valve 3, and the low temperature side heat exchanger 4 are annularly connected by a refrigerant pipe to configure a refrigerant circuit. The compressor 1 has a variable capacity of compressing the refrigerant. In this embodiment 1, changing a rotational speed of the compressor 1 can change a refrigerant compressing capacity of the compressor 1. In this embodiment 1, carbon dioxide is used as a refrigerant.

The high temperature side heat exchanger 2 exchanges heat between a refrigerant of high temperature and high pressure compressed by the compressor 1 and a heat medium. In this embodiment 1, the heat medium is water. The water is fed to the high temperature side heat exchanger 2 by the pump 6. The water is heated by heat from the high temperature refrigerant in the high temperature side heat exchanger 2. The heated hot water flows out of the high temperature side heat exchanger 2. Water removes heat from the high pressure refrigerant and the high pressure refrigerant is cooled in the high temperature side heat exchanger 2. The high pressure refrigerant cooled and reduced in temperature flows out of the high temperature side heat exchanger 2. If pressure of the high pressure refrigerant discharged from the compressor 1 is not less than critical pressure, the high pressure refrigerant in the high temperature side heat exchanger 2 is reduced in temperature still in a supercritical state without gas-liquid phase transition. On the other hand, if the pressure of the high pressure refrigerant discharged from the compressor 1 is less than critical pressure, the high pressure refrigerant in the high temperature side heat exchanger 2 is liquefied with decreasing temperature.

The expansion valve 3 is an expansion unit that expands the high pressure refrigerant having passed through the high temperature side heat exchanger 2. The high pressure refrigerant passes through the expansion valve 3 and is thus reduced in pressure into a low pressure gas-liquid two-phase state. The low temperature side heat exchanger 4 exchanges heat between a low pressure refrigerant having passed through the expansion valve 3 and a fluid. In this embodiment 1, the fluid is outdoor air, that is, outside air. The blower 5 is a feeding unit that feeds air to the low temperature side heat exchanger 4. The low pressure refrigerant absorbs heat from the air while passing through the low temperature side heat exchanger 4, evaporates and gasifies. The refrigerant removes heat from the air and cools the air in the low temperature side heat exchanger 4. A low pressure refrigerant gas having flowed out of the low temperature side heat exchanger 4 is sucked into the compressor 1.

The high pressure sensor 7 is pressure detection means for detecting pressure of the high pressure refrigerant compressed by the compressor 1, that is, high pressure side refrigerant pressure. The high pressure sensor 7 is provided in a refrigerant pipe downstream of the compressor 1. The low pressure sensor 8 is pressure detection means for detecting pressure of the low pressure refrigerant before being compressed by the compressor 1, that is, low pressure side refrigerant pressure. The low pressure sensor 8 is provided in a refrigerant pipe upstream of the compressor 1.

The controller 9 is control means for controlling an operation of the refrigeration cycle device 100. To the controller 9, the compressor 1, the expansion valve 3, the blower 5, the pump 6, the high pressure sensor 7, and the low pressure sensor 8 are electrically connected. Further, actuators, sensors, a user interface device, or the like (not shown) may be electrically connected to the controller 9. The controller 9 includes a processor 91, and a memory 92 that stores control programs and data. The controller 9 controls the operations of the compressor 1, the expansion valve 3, the blower 5, and the pump 6 according to the programs stored in the memory 92 based on information detected by each sensor, instruction information from the user interface device, or the like, and thus controls the refrigeration cycle device 100.

The controller 9 can change an operation frequency, that is, power frequency for the compressor 1 to change a rotational speed of the compressor 1. Thus, the controller 9 can control the refrigerant compressing capacity of the compressor 1. The controller 9 can control opening of the expansion valve 3. The controller 9 can change an operating point of the blower 5 to control a flow rate of air fed to the low temperature side heat exchanger 4. In the description below, the operating point of the blower 5 is represented by a fan rotational speed of the blower 5. The controller 9 can control the fan rotational speed of the blower 5 to control the flow rate of air fed to the low temperature side heat exchanger 4.

The controller 9 performs control so that a temperature of hot water flowing out of the high temperature side heat exchanger 2, that is, an output hot water temperature matches a target output hot water temperature. The target temperature is set to, for example, about 65°C to 90°C. The controller 9 can control, for example, a rotational speed of the pump 6 to control the output hot water temperature. With the refrigeration cycle device 100, heat from outdoor air can be absorbed to generate hot water, thereby achieving high energy efficiency.

In the refrigeration cycle device 100, the high pressure side refrigerant pressure is likely to increase when a temperature of air fed to the low temperature side heat exchanger 4 (hereinafter referred to as "outside air temperature") is high, a temperature of water fed to the high temperature side heat exchanger 2 (hereinafter referred to as "feed-water temperature") is high, or both the outside air temperature and the feed-water temperature are high. In such a case, an operating state needs to be controlled so that the high pressure side refrigerant pressure does not exceed allowable pressure of the refrigerant circuit. Increasing the opening of the expansion valve 3 can reduce the high pressure side refrigerant pressure. However, increasing the opening of the expansion valve 3 reduces a temperature of the refrigerant discharged from the compressor 1, thereby reducing the output hot water temperature. This may prevent the target output hot water temperature from being achieved. Another method of reducing the high pressure side refrigerant pressure is a method of reducing the rotational speed of the compressor 1, that is, reducing the refrigerant compressing capacity of the compressor 1. However, reducing the refrigerant compressing capacity of the compressor 1 reduces a power of heating water in the high temperature side heat exchanger 2. The reduction in heating power in the high temperature side heat exchanger 2 reduces an amount of output hot water.

A further method of reducing the high pressure side refrigerant pressure may be a method of reducing low pressure side refrigerant pressure. Reducing the fan rotational speed of the blower 5, that is, reducing the flow rate of air fed to the low temperature side heat exchanger 4 reduces an amount of heat absorbed from air by the refrigerant in the low temperature side heat exchanger 4, thereby reducing the low pressure side refrigerant pressure. Increasing the fan rotational speed of the blower 5, that is, increasing the flow rate of air fed to the low temperature side heat exchanger 4 increases an amount of heat absorbed from air by the refrigerant in the low temperature side heat exchanger 4, thereby increasing the low pressure side refrigerant pressure.

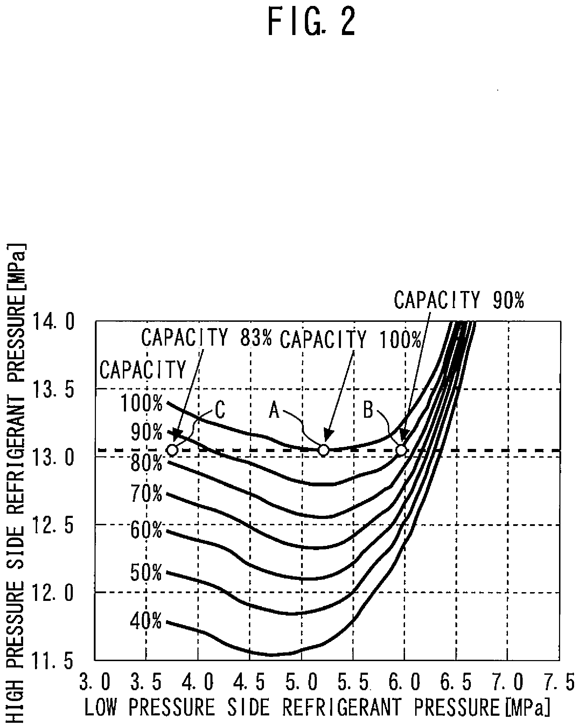

Figure 2 shows a relationship among the low pressure side refrigerant pressure, the high pressure side refrigerant pressure, and the refrigerant compressing capacity of the compressor 1 in the refrigeration cycle device 100. In Figure 2, the abscissa represents the low pressure side refrigerant pressure and the ordinate represents the high pressure side refrigerant pressure. A plurality of curves in Figure 2 represent a relationship between the low pressure side refrigerant pressure and the high pressure side refrigerant pressure when the refrigerant compressing capacity of the compressor 1 is 100%, 90%, 80%, 70%, 60%, 50%, and 40%, respectively.

As shown in Figure 2, when it is assumed that the low pressure side refrigerant pressure is changed with a constant refrigerant compressing capacity of the compressor 1, there are a range of the low pressure side refrigerant pressure in which the high pressure side refrigerant pressure decreases with decreasing low pressure side refrigerant pressure, and a range of the low pressure side refrigerant pressure in which the high pressure side refrigerant pressure increases with decreasing low pressure side refrigerant pressure. The high pressure side refrigerant pressure is minimized between the two ranges. This holds when the refrigerant compressing capacity of the compressor 1 is any of 100%, 90%, 80%, 70%, 60%, 50%, and 40%, that is, holds irrespectively of the refrigerant compressing capacity of the compressor 1. As such, in the refrigeration cycle device 100, when the low pressure side refrigerant pressure is gradually reduced with the constant refrigerant compressing capacity of the compressor 1, the high pressure side refrigerant pressure decreases halfway with decreasing low pressure side refrigerant pressure. However, then, the high pressure side refrigerant pressure increases with decreasing low pressure side refrigerant pressure to the contrary. Thus, excessively reducing the low pressure side refrigerant pressure may increase high pressure side refrigerant pressure. Such a characteristic is shown because the reduction in low pressure side refrigerant pressure reduces a refrigerant density in the low temperature side heat exchanger 4, thereby reducing an amount of refrigerant in the low temperature side heat exchanger 4 while increasing an amount of refrigerant in the high temperature side heat exchanger 2.

For the reason described above, in order to reduce the high pressure side refrigerant pressure, the low pressure side refrigerant pressure does not need to be always reduced, but the low pressure side refrigerant pressure needs to be increased in some cases. In this view, the refrigeration cycle device 100 of this embodiment 1 sets, as a target operating state, an operating state in which the high pressure side refrigerant pressure is minimized when it is assumed that the low pressure side refrigerant pressure is changed with the constant refrigerant compressing capacity of the compressor 1. Then, the controller 9 controls the operation of the blower 5 so that an actual operating state of the refrigeration cycle device 100 approaches the target operating state.

A point A in Figure 2 shows an operating state in which the high pressure side refrigerant pressure is minimized when the refrigerant compressing capacity of the compressor 1 is 100%. Specifically, the point A shows a target operating state when the refrigerant compressing capacity of the compressor 1 is 100%. In the example in Figure 2, at the point A, the low pressure side refrigerant pressure is 5.2 MPa and the high pressure side refrigerant pressure is 13.1 MPa. Here, for convenience of description, it is assumed that 13.1 MPa shown by a broken line in Figure 2 is allowable pressure. As shown by a point B, if the low pressure side refrigerant pressure is 5.9 MPa, the refrigerant compressing capacity of the compressor 1 needs to be limited to 90% in order to set the high pressure side refrigerant pressure within the allowable pressure. Also, as shown by a point C, if the low pressure side refrigerant pressure is 3.7 MPa, the refrigerant compressing capacity of the compressor 1 needs to be limited to 83% in order to set the high pressure side refrigerant pressure within the allowable pressure. As such, if the operating state of the refrigeration cycle device 100 is deviated from the target operating state, the refrigerant compressing capacity of the compressor 1 cannot be exerted 100%, and a potential of the refrigeration cycle device 100 cannot be fully taken advantage of in some cases. The numerical values described above are examples, and obviously differ depending on specifications of the device.

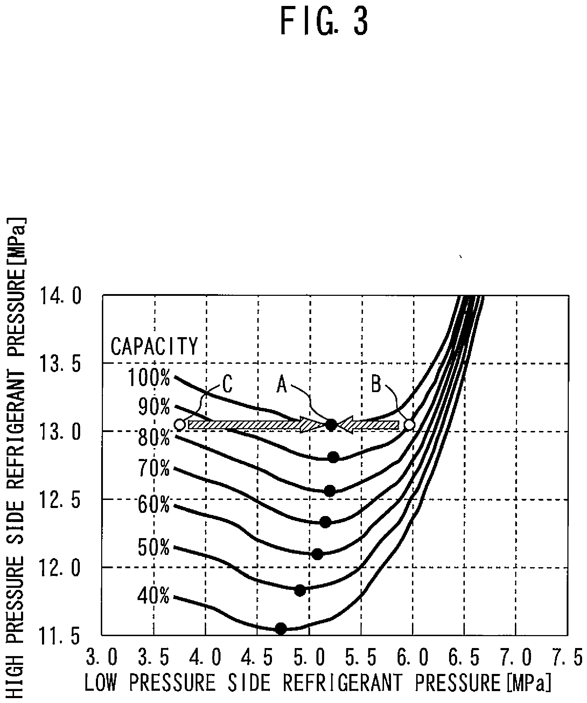

Figure 3 is similar to Figure 2, and shows a relationship among the low pressure side refrigerant pressure, the high pressure side refrigerant pressure, and the refrigerant compressing capacity of the compressor 1 in the refrigeration cycle device 100. Black points in Figure 3 show target operating states when the refrigerant compressing capacity of the compressor 1 is 100%, 90%, 80%, 70%, 60%, 50%, and 40%, respectively. As shown in Figure 3, if a current operating state is the point B, reducing the low pressure side refrigerant pressure allows the operating state to approach the target operating state. Thus, if the current operating state is the point B, the controller 9 performs control to reduce the fan rotational speed of the blower 5 and reduce the flow rate of air fed to the low temperature side heat exchanger 4. Reducing the flow rate of air fed to the low temperature side heat exchanger 4 reduces the low pressure side refrigerant pressure, thereby allowing the operating state to approach the target operating state from the point B. Causing the operating state to approach the target operating state from the point B reduces the high pressure side refrigerant pressure, thereby providing allowance for allowable pressure. This allows the refrigerant compressing capacity of the compressor 1 to increase. This allows the heating power in the high temperature side heat exchanger 2 to increase.

On the other hand, if the current operating state is the point C, increasing the low pressure side refrigerant pressure allows the operating state to approach the target operating state. Thus, if the current operating state is the point C, the controller 9 performs control to increase the fan rotational speed of the blower 5 and increase the flow rate of air fed to the low temperature side heat exchanger 4. Increasing the flow rate of air fed to the low temperature side heat exchanger 4 increases the low pressure side refrigerant pressure, thereby allowing the operating state to approach the target operating state from the point C. Causing the operating state to approach the target operating state from the point C reduces the high pressure side refrigerant pressure, thereby providing allowance for allowable pressure. This allows the refrigerant compressing capacity of the compressor 1 to increase. This allows the heating power in the high temperature side heat exchanger 2 to increase.

In this embodiment 1, with the control as described above, an increase in high pressure side refrigerant pressure can be curbed without a reduction in refrigerant compressing capacity of the compressor 1. Specifically, the increase in high pressure side refrigerant pressure can be curbed without a reduction in heating power in the high temperature side heat exchanger 2. Also, according to this embodiment 1, the increase in high pressure side refrigerant pressure can be curbed without an increase in opening of the expansion valve 3. This can avoid a reduction in discharge refrigerant temperature from the compressor 1 due to the increase in opening of the expansion valve 3, and thus avoid a decline in heating temperature, that is, output hot water temperature in the high temperature side heat exchanger 2. As such, according to this embodiment 1, the increase in high pressure side refrigerant pressure can be curbed without reductions in heating power and heating temperature in the high temperature side heat exchanger 2 of the refrigeration cycle device 100. This can prevent increases in cost and weight of the refrigerant circuit due to an increase in allowable pressure of the refrigerant circuit.

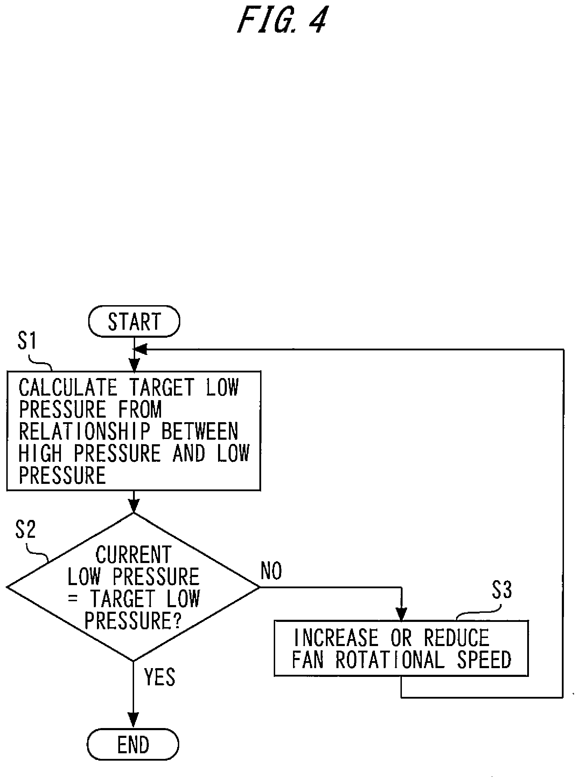

Figure 4 is a flowchart showing a process of the controller 9 controlling the operation of the blower 5 in this embodiment 1. In the flowchart in Figure 4 and flowcharts in embodiments described later, the high pressure side refrigerant pressure is expressed as "high pressure" and the low pressure side refrigerant pressure is expressed as "low pressure" for convenience. In step S1 in Figure 4, the controller 9 first calculates a target value of the low pressure side refrigerant pressure, that is, target low pressure side refrigerant pressure based on current high pressure side refrigerant pressure detected by the high pressure sensor 7 and current low pressure side refrigerant pressure detected by the low pressure sensor 8. In the description below, the target low pressure side refrigerant pressure is abbreviated as "target low pressure" for convenience. Information on low pressure side refrigerant pressure and high pressure side refrigerant pressure in a plurality of target operating states that differ depending on the refrigerant compressing capacity of the compressor 1 is previously examined by experiment, simulation, or the like, and the information is stored in the controller 9. For example, the controller 9 previously stores values of low pressure side refrigerant pressure and high pressure side refrigerant pressure in each of the plurality of target operating states shown by the black points in Figure 3. In step S1 in Figure 4, the controller 9 selects a target operating state having a value of the high pressure side refrigerant pressure equal to the current high pressure side refrigerant pressure based on the stored information, and sets the selected value of the low pressure side refrigerant pressure in the target operating state as target low pressure. For example, when the current operating state is the point B or the point C in Figure 3, and the current high pressure side refrigerant pressure is 13.1 MPa, the controller 9 sets 5.2 MPa which is the low pressure side refrigerant pressure of the point A as the target low pressure.

Then, the controller 9 moves to step S2, and determines whether the current low pressure side refrigerant pressure matches the target low pressure. If the current low pressure side refrigerant pressure matches the target low pressure, the controller 9 finishes the process in this flowchart. On the other hand, if the current low pressure side refrigerant pressure does not match the target low pressure in step S2, the controller 9 moves to step S3. In step S3, the controller 9 increases or reduces the fan rotational speed of the blower 5 as described below. If the current low pressure side refrigerant pressure is higher than the target low pressure, the controller 9 reduces the fan rotational speed of the blower 5, that is, reduces the flow rate of air fed to the low temperature side heat exchanger 4. On the other hand, if the current low pressure side refrigerant pressure is lower than the target low pressure, the controller 9 increases the fan rotational speed of the blower 5, that is, the flow rate of air fed to the low temperature side heat exchanger 4. The controller 9 returns to step S1 after step S3. Repeating the process in the flowchart in Figure 4 allows the low pressure side refrigerant pressure to approach the target low pressure, thereby allowing the actual operating state to approach the target operating state.

As such, in this embodiment 1, the controller 9 performs feedback control of the low pressure side refrigerant pressure so that the low pressure side refrigerant pressure matches the target low pressure. The controller 9 may change an increase width or a reduction width of the fan rotational speed of the blower 5 in step S3 by proportional control, integral control, derivative control, or any combination thereof, based on a deviation between the current low pressure side refrigerant pressure and the target low pressure. Also, when determining whether or not the current low pressure side refrigerant pressure matches the target low pressure in step S2, the controller 9 may determine that the current low pressure side refrigerant pressure matches the target low pressure if the following expression is satisfied, with allowable ranges $\Delta P1$ and $\Delta P2$ being set. This can prevent continuity of minute fluctuations of the fan rotational speed of the blower 5 and the fan rotational speed can converge more stably.

$$\text{Target low pressure } -\Delta P1 < \text{current low pressure side refrigerant pressure} < \text{target}$$

$$\text{low pressure} + \Delta P2$$

Although the target low pressure is set in the flowchart in Figure 4, the controller 9 may perform control as described below without setting the target low pressure. The controller 9 first determines whether a point representing the current operating state, that is, a point represented by the current low pressure side refrigerant pressure and the current high pressure side refrigerant pressure is located on left or right of a target operating state line connecting the plurality of black points in Figure 3. The point representing the current operating state being located on the right of the target operating state line means that the current low pressure side refrigerant pressure is higher than the low pressure side refrigerant pressure in the target operating state. Thus, when the point representing the current operating state is located on the right of the target operating state line, the controller 9 reduces the fan rotational speed of the blower 5. This reduces the low pressure side refrigerant pressure to approach the target low pressure, thereby allowing the actual operating state to approach the target operating state. On the other hand, the current operating state being located on the left of the target operating state line means that the current low pressure side refrigerant pressure is lower than the low pressure side refrigerant pressure in the target operating state. Thus, when the current operating state is located on the left of the target operating state line, the controller 9 increases the fan rotational speed of the blower 5. This increases the low pressure side refrigerant pressure to approach the target low pressure, thereby allowing the actual operating state to approach the target operating state.

In this embodiment 1, control as described below may be performed instead of the control in the flowchart in Figure 4. The controller 9 previously stores a relationship between the low pressure side refrigerant pressure in the target operating state and the refrigerant compressing capacity of the compressor 1. For example, the controller 9 previously stores values of the low pressure side refrigerant pressure in the target operating states when the refrigerant compressing capacity of the compressor 1 is 100%, 90%, 80%, 70%, 60%, 50%, and 40%, respectively. The controller 9 sets, as target low pressure, the value of the low pressure side refrigerant pressure in the target operating state corresponding to the current refrigerant compressing capacity of the compressor 1 based on the stored relationship and the current refrigerant compressing capacity of the compressor 1. When the current low pressure side refrigerant pressure detected by the low pressure sensor 8 is higher than the target low pressure, the controller 9 reduces the fan rotational speed of the blower 5. This reduces the low pressure side refrigerant pressure to approach the target low pressure, thereby allowing the actual operating state to approach the target operating state. On the other hand, when the current low pressure side refrigerant pressure is lower than the target low pressure, the controller 9 increases the fan rotational speed of the blower 5. This increases the low pressure side refrigerant pressure to approach the target low pressure, thereby allowing the actual operating state to approach the target operating state. Since the control as described above does not require detection of the high pressure side refrigerant pressure, the high pressure sensor 7 does not need to be provided.

In this embodiment 1, the high pressure sensor 7 and the low pressure sensor 8 are used as pressure detection means, but the pressure detection means in the present invention is not limited to them. For example, pressure detection means may be used for calculating pressure by saturation temperature conversion based on a temperature detected by a temperature sensor provided in a two-phase portion with a refrigerant in a gas-liquid two-phase state.

Since the refrigeration cycle device 100 of this embodiment 1 uses carbon dioxide as the refrigerant, discharge pressure (high pressure side refrigerant pressure) of the compressor 1 becomes supercritical, or suction pressure (low pressure side refrigerant pressure) of the compressor 1 significantly changes (for example, changes about 4 MPa) according to the operating state. Thus, since the density of the refrigerant significantly changes, the high pressure side refrigerant pressure tends to significantly change with changes in low pressure side refrigerant pressure. With such a characteristic, the advantage of the present invention is notably exerted in this embodiment 1. However, the refrigerant in the present invention is not limited to carbon dioxide. In the present invention, for example, a refrigerant such as R410A, propane, or propylene may be used.

In this embodiment 1, the example in which the heat medium heated by the refrigerant in the high temperature side heat exchanger 2 is water has been described, however, the heat medium in the present invention is not limited to water. The heat medium in the present invention may be, for example, antifreeze, brine, or the like. The heated heat medium may be used for any applications such as for an indoor heating, not limited to hot water supply. In this embodiment 1, the example in which the fluid cooled by the refrigerant in the low temperature side heat exchanger 4 is air (outside air) has been described, but the fluid in the present invention is not limited to air. In the present invention, the fluid subjected to heat exchange with the refrigerant in the low temperature side heat exchanger 4 may be, for example, groundwater or solar hot water. In this embodiment 1, the example in which a feeding unit for feeding the fluid to the low temperature side heat exchanger 4 is the blower 5 has been described, but the feeding unit for feeding the fluid to the low temperature side heat exchanger in the present invention is not limited to the blower 5. For example, when the fluid fed to the low temperature side heat exchanger is a liquid, a pump for feeding a liquid may constitute the feeding unit, and controlling an operation of the pump allows control as in this embodiment 1.

Embodiment 2

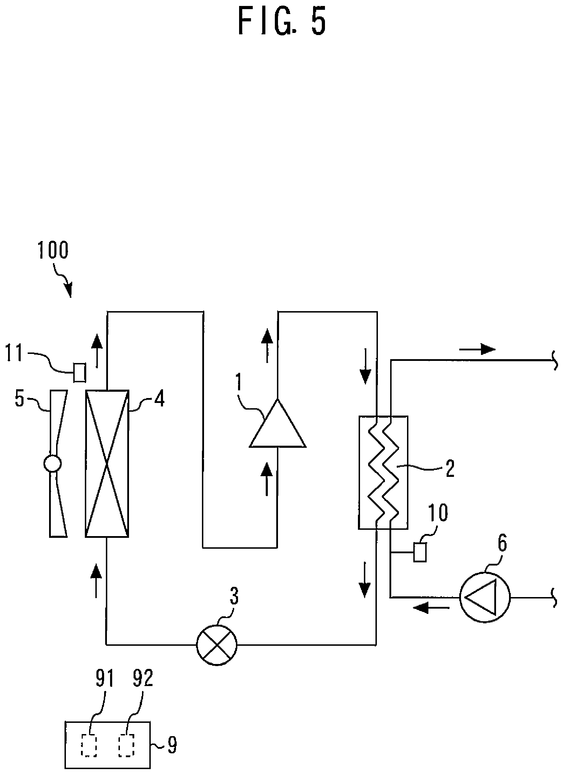

Next, with reference to Figures 5 to 7, embodiment 2 of the present invention will be described. Differences from embodiment 1 described above are mainly described, and like or corresponding components are denoted by like reference numerals and descriptions thereof are omitted. Figure 5 is a configuration diagram of a refrigeration cycle device 100 according to embodiment 2 of the present invention. As shown in Figure 5, the refrigeration cycle device 100 of this embodiment 2 does not include a high pressure sensor 7 and a low pressure sensor 8, but includes a feed-water temperature sensor 10 and an outside air temperature sensor 11. The feed-water temperature sensor 10 detects a temperature of water fed to a high temperature side heat exchanger 2, that is, a feed-water temperature (entry heat medium temperature). The outside air temperature sensor 11 detects a temperature of air fed to a low temperature side heat exchanger 4, that is, an outside air temperature (entry fluid temperature).

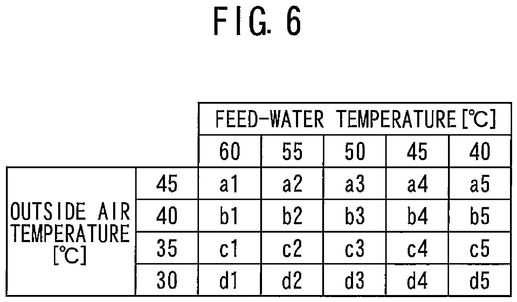

A fan rotational speed of a blower 5 when an operating state of the refrigeration cycle device 100 matches a target operating state changes depending on the feed-water temperature and the outside air temperature. The controller 9 stores a relationship among the feed-water temperature, the outside air temperature, and an operating point, that is, a fan rotational speed of the blower 5 that achieves the target operating state at that feed-water temperature and that outside air temperature. Figure 6 is a table schematically showing the relationship stored in the controller 9. In Figure 6, a1, a2, a3, ..., d4, and d5 each refer to a fan rotational speed that achieves the target operating state at a corresponding feed-water temperature and outside air temperature. Specifically, these fan rotational speeds are fan rotational speeds of the blower 5 when the operating state of the refrigeration cycle device 100 is the target operating state under conditions of each feed-water temperature and each outside air temperature. The relationship shown in Figure 6 is previously examined by experiment, simulation, or the like, and stored in the controller 9.

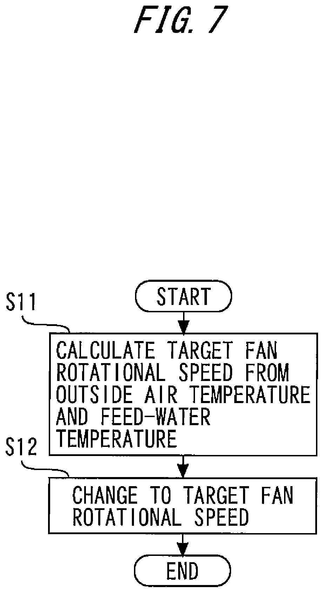

Figure 7 is a flowchart showing a process of the controller 9 controlling the operation of the blower 5 in this embodiment 2. In step S11 in Figure 7, the controller 9 first calculates a target fan rotational speed of the blower 5 based on a current feed-water temperature detected by the feed-water temperature sensor 10, a current outside air temperature detected by the outside air temperature sensor 11, and the relationship shown in Figure 6. Then, the controller 9 moves to step S12, and controls the blower 5 so that an actual fan rotational speed of the blower 5 matches the target fan rotational speed calculated in step S11. As such, the controller 9 controls the fan rotational speed of the blower 5 to the target fan rotational speed, thereby allowing the operating state of the refrigeration cycle device 100 to approach the target operating state.

In embodiment 1 described above, the fan rotational speed of the blower 5 may take time to converge, and thus it may take time for the operating state of the refrigeration cycle device 100 to approach the target operating state. In contrast, this embodiment 2 can reduce time required for causing the operating state of the refrigeration cycle device 100 to approach the target operating state.

Embodiment 3

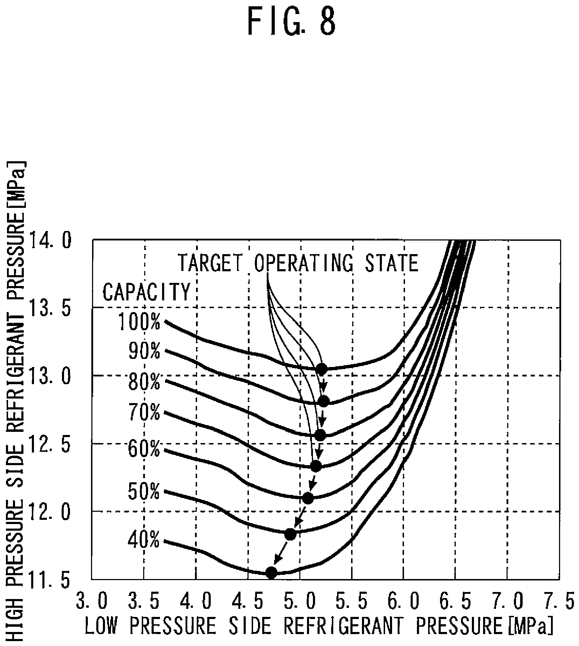

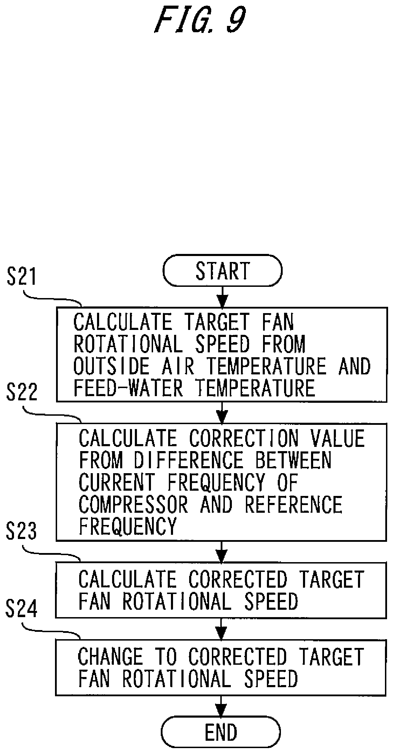

Next, with reference to Figures 8 and 9, embodiment 3 of the present invention will be described. Since this embodiment 3 is similar to embodiment 2 described above, differences from embodiment 2 are mainly described, and like or corresponding components are denoted by like reference numerals and descriptions thereof are omitted. A configuration diagram of a refrigeration cycle device 100 of this embodiment 3 is similar to that of embodiment 2 described above and is thus omitted.

Figure 8 is similar to Figure 3, and shows a relationship among low pressure side refrigerant pressure, high pressure side refrigerant pressure, and a refrigerant compressing capacity of a compressor 1 in the refrigeration cycle device 100. The low pressure side refrigerant pressure in a target operating state changes depending on the refrigerant compressing capacity of the compressor 1. As shown in Figure 8, the low pressure side refrigerant pressure in the target operating state decreases with decreasing refrigerant compressing capacity of the compressor 1. Thus, in order to achieve the target operating state, it is necessary to reduce a flow rate of air to a low temperature side heat exchanger 4, that is, reduce a fan rotational speed of a blower 5 with decreasing refrigerant compressing capacity of the compressor 1. Also, it is necessary to increase the flow rate of air to the low temperature side heat exchanger 4, that is, increase the fan rotational speed of the blower 5 with increasing refrigerant compressing capacity of the compressor 1. In this view, the controller 9 performs control as described below in this embodiment 3.

The controller 9 of the refrigeration cycle device 100 in this embodiment 3 stores a relationship among a feed-water temperature, an outside air temperature, and a fan rotational speed of the blower 5 that achieves a target operating state at that feed-water temperature and that outside air temperature, that is, a relationship similar to that in Figure 6 described above. The relationship in Figure 6 stored in the controller 9 represents a characteristic when an operation frequency of the compressor 1 is equal to a previously set reference frequency. The refrigerant compressing capacity of the compressor 1 depends on the rotational speed of the compressor 1. Specifically, the refrigerant compressing capacity of the compressor 1 depends on the operation frequency. When the operation frequency of the compressor 1 is lower than the reference frequency, that is, when the refrigerant compressing capacity of the compressor 1 is lower than a reference capacity corresponding to the reference frequency, the controller 9 makes a correction to reduce a target fan rotational speed calculated from the relationship in Figure 6. In contrast, when the operation frequency of the compressor 1 is higher than the reference frequency, that is, when the refrigerant compressing capacity of the compressor 1 is higher than the reference capacity, the controller 9 makes a correction to increase the target fan rotational speed calculated from the relationship in Figure 6.

Figure 9 is a flowchart showing a process of the controller 9 controlling the operation of the blower 5 in this embodiment 3. In step S21 in Figure 9, the controller 9 first calculates a target fan rotational speed of the blower 5 based on a current feed-water temperature detected by a feed-water temperature sensor 10, a current outside air temperature detected by an outside air temperature sensor 11, and the relationship shown in Figure 6. Then, the controller 9 moves to step S22, and calculates, based on a difference between a current operation frequency of the compressor 1 and the reference frequency, a correction value, using a predetermined calculation expression. The correction value is, for example, a correction factor. A case where the correction factor is used as the correction value will be described below. In step 22, the controller 9 calculates the correction factor as 1 when the current operation frequency of the compressor 1 is equal to the reference frequency, calculates the correction factor as a value larger than 1 when the current operation frequency of the compressor 1 is higher than the reference frequency, and calculates the correction factor as a value smaller than 1 when the current operation frequency of the compressor 1 is lower than the reference frequency. Then, the controller 9 moves to step S23, and corrects the target fan rotational speed calculated in step S21 with the correction factor calculated in step S22. Specifically, in step S23, the controller 9 multiplies the target fan rotational speed calculated in step S21 by the correction factor calculated in step S22 to calculate a corrected target fan rotational speed. Then, the controller 9 moves to step S24, and controls the blower 5 so that an actual fan rotational speed of the blower 5 matches the corrected target fan rotational speed calculated in step S23. As such, the controller 9 controls the fan rotational speed of the blower 5 to the corrected target fan rotational speed, thereby allowing the operating state of the refrigeration cycle device 100 to approach the target operating state.

In the process described above, correcting the target fan rotational speed with the correction value based on the difference between the current operation frequency of the compressor 1 and the reference frequency corresponds to correcting the target fan rotational speed based on a difference between the current refrigerant compressing capacity of the compressor 1 and the reference capacity.

According to this embodiment 3, the fan rotational speed of the blower 5 can be more appropriately controlled depending on the refrigerant compressing capacity of the compressor 1, thereby allowing the operating state of the refrigeration cycle device 100 to approach the target operating state with higher accuracy. Also, there is no need to store, in the controller 9, the relationship shown in Figure 6 as multiple sets of relationships that differ depending on the operation frequency or the capacity of the compressor 1, and only the relationship when the operation frequency of the compressor 1 is the reference frequency may be stored in the controller 9, thereby reducing an amount of stored data.

In the present invention, instead of the correction as in this embodiment 3, the multiple sets of relationships like Figure 6 may be stored in the controller 9, the relationships differing depending on the operation frequency or the capacity of the compressor 1. In that case, the target fan rotational speed of the blower 5 depending on the operation frequency or the refrigerant compressing capacity of the compressor 1 can be directly calculated based on the relationships stored in the controller 9.

Embodiment 4

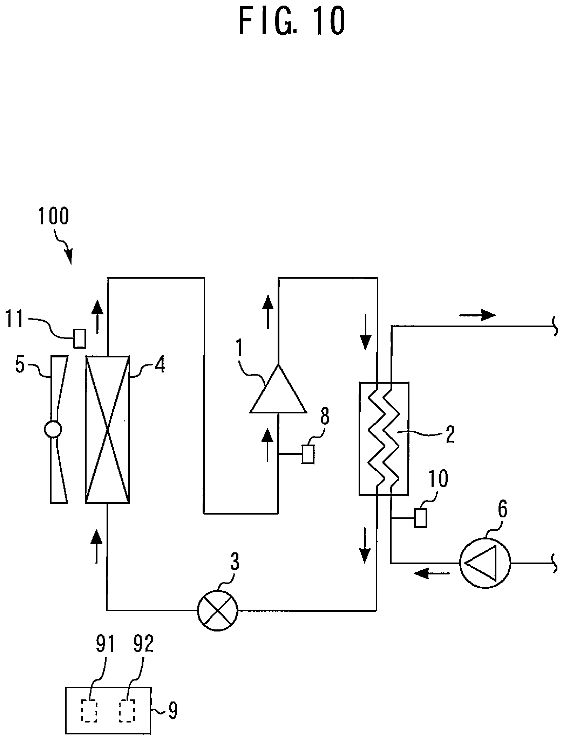

Next, with reference to Figures 10 to 12, embodiment 4 of the present invention will be described. Since this embodiment 4 is an addition of further control to embodiment 3 described above, the addition to embodiment 3 is mainly described, and like or corresponding components are denoted by like reference numerals and descriptions thereof are omitted. Figure 10 is a configuration diagram of a refrigeration cycle device 100 of this embodiment 4. As shown in Figure 10, the refrigeration cycle device 100 of this embodiment 4 includes a low pressure sensor 8 in addition to the configuration in embodiment 3.

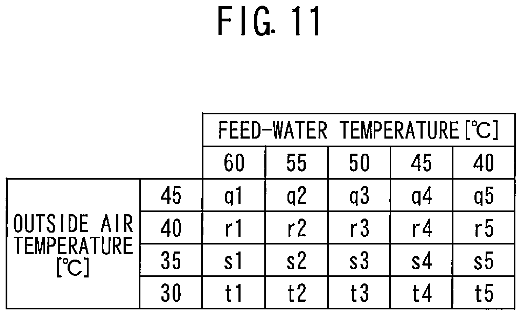

A controller 9 further stores a relationship among a feed-water temperature, an outside air temperature, and low pressure side refrigerant pressure in a target operating state. Figure 11 is a table schematically showing the relationship stored in the controller 9. In Figure 11, q1, q2, q3, ..., t4, and t5 each refer to low pressure side refrigerant pressure in the target operating state at a corresponding feed-water temperature and outside air temperature. The relationship shown in Figure 11 is previously examined by experiment, simulation, or the like, and stored in the controller 9. The relationship in Figure 11 stored in the controller 9 represents a characteristic when an operation frequency of the compressor 1 is equal to a reference frequency. As described above, the low pressure side refrigerant pressure in the target operating state decreases with decreasing refrigerant compressing capacity of the compressor 1. Thus, in this embodiment 4, when the operation frequency of the compressor 1 is lower than the reference frequency, that is, when the refrigerant compressing capacity of the compressor 1 is lower than a reference capacity, the controller 9 makes a correction to reduce target low pressure calculated from the relationship in Figure 11. In contrast, when the operation frequency of the compressor 1 is higher than the reference frequency, that is, when the refrigerant compressing capacity of the compressor 1 is higher than the reference capacity, the controller 9 makes a correction to increase the target low pressure calculated from the relationship in Figure 11.

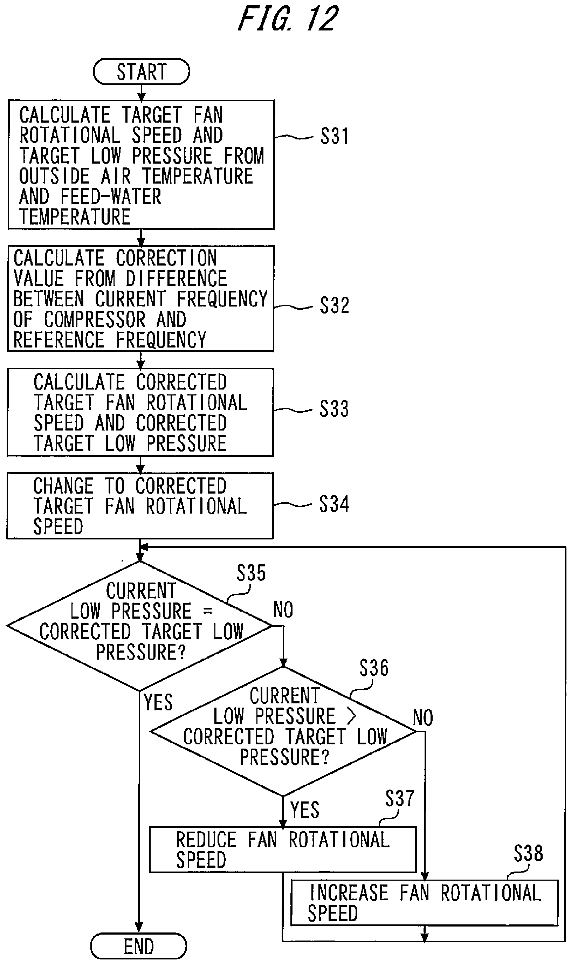

Figure 12 is a flowchart showing a process of the controller 9 controlling the operation of the blower 5 in this embodiment 4. In step S31 in Figure 12, the controller 9 first calculates a target fan rotational speed and target low pressure of the blower 5 based on a current feed-water temperature detected by a feed-water temperature sensor 10, a current outside air temperature detected by an outside air temperature sensor 11, the relationship in Figure 6, and the relationship in Figure 11. Then, the controller 9 moves to step S32, and calculates a correction value of the target fan rotational speed and a correction value of the target low pressure based on a difference between a current operation frequency of the compressor 1 and the reference frequency. These correction values are, for example, correction factors. A case where the correction factor is used as the correction value will be described below. In step S32, the controller 9 calculates the correction factor as 1 when the current operation frequency of the compressor 1 is equal to the reference frequency, calculates the correction factor as a value larger than 1 when the current operation frequency of the compressor 1 is higher than the reference frequency, and calculates the correction factor as a value smaller than 1 when the current operation frequency of the compressor 1 is lower than the reference frequency. Then, the controller 9 moves to step S33, and corrects the target fan rotational speed and the target low pressure calculated in step S31 with the correction factor calculated in step S32. Specifically, in step S33, the controller 9 multiplies the target fan rotational speed and the target low pressure calculated in step S31 by the correction factor calculated in step S32 to calculate a corrected target fan rotational speed and corrected target low pressure. Then, the controller 9 moves to step S34, and controls the blower 5 so that an actual fan rotational speed of the blower 5 matches the corrected target fan rotational speed calculated in step S33.

Then, the controller 9 moves to step S35, and determines whether the current low pressure side refrigerant pressure detected by the low pressure sensor 8 matches the corrected target low pressure calculated in step S33. If the current low pressure side refrigerant pressure matches the corrected target low pressure, the controller 9 finishes the process in this flowchart. On the other hand, if the current low pressure side refrigerant pressure does not match the corrected target low pressure in step S35, the controller 9 moves to step S36. In step S36, the controller 9 determines whether or not the current low pressure side refrigerant pressure is higher than the corrected target low pressure. In step S36, if the current low pressure side refrigerant pressure is higher than the corrected target low pressure, the controller 9 moves to step S37, and makes a correction to slightly reduce the fan rotational speed of the blower 5. Specifically, in step S37, a flow rate of air fed to the low temperature side heat exchanger 4 is reduced. On the other hand, if the current low pressure side refrigerant pressure is lower than the corrected target low pressure, the controller 9 moves to step S38, and makes a correction to slightly increase the fan rotational speed of the blower 5. Specifically, in step S38, the flow rate of air fed to the low temperature side heat exchanger 4 is increased. The controller 9 returns to step S35 after steps S37 and S38.

When determining whether or not the current low pressure side refrigerant pressure matches the corrected target low pressure in step S35, the controller 9 may determine that the current low pressure side refrigerant pressure matches the corrected target low pressure if the following expression is satisfied, with allowable ranges $\Delta P1$ and $\Delta P2$

being set. This can prevent continuity of minute fluctuations of the fan rotational speed of the blower 5 and the fan rotational speed can converge more stably.

$$\text{Corrected target low pressure} - \Delta P1 < \text{current low pressure side refrigerant}$$

$$\text{pressure} < \text{corrected target low pressure} + \Delta P2$$

As described above, in this embodiment 4, the controller 9 controls the fan rotational speed of the blower 5 to the target fan rotational speed, then checks whether the low pressure side refrigerant pressure matches the corrected target low pressure, and corrects the fan rotational speed so that the low pressure side refrigerant pressure matches the corrected target low pressure if the low pressure side refrigerant pressure does not match the corrected target low pressure. Specifically, the controller 9 performs feedback control of the low pressure side refrigerant pressure so that the low pressure side refrigerant pressure matches the corrected target low pressure. Thus, according to this embodiment 4, the operating state of the refrigeration cycle device 100 can approach the target operating state with higher accuracy than in embodiment 3.

In this embodiment 4, when the controller 9 corrects the fan rotational speed of the blower 5, the process in step S37 or S38 is repeated, which changes the fan rotational speed of the blower 5 in stages. A magnitude of the change in fan rotational speed in steps S37 and S38 corresponds to a magnitude of the change in fan rotational speed for one stage. A gradient of the change in high pressure side refrigerant pressure with respect to the change in low pressure side refrigerant pressure is gentler with decreasing refrigerant compressing capacity of the compressor 1. Thus, a gradient of the change in high pressure side refrigerant pressure with respect to the fan rotational speed of the blower 5 is gentler with decreasing refrigerant compressing capacity of the compressor 1. In this view, the controller 9 may increase the magnitude of the change in fan rotational speed in steps S37 and S38 with decreasing refrigerant compressing capacity of the compressor 1. Thus, even if the refrigerant compressing capacity of the compressor 1 is low, an increase in the number of repetitions of the process in step S37 or S38 can be curbed, thereby reducing the time before the fan rotational speed of the blower 5 converges.

Embodiment 5

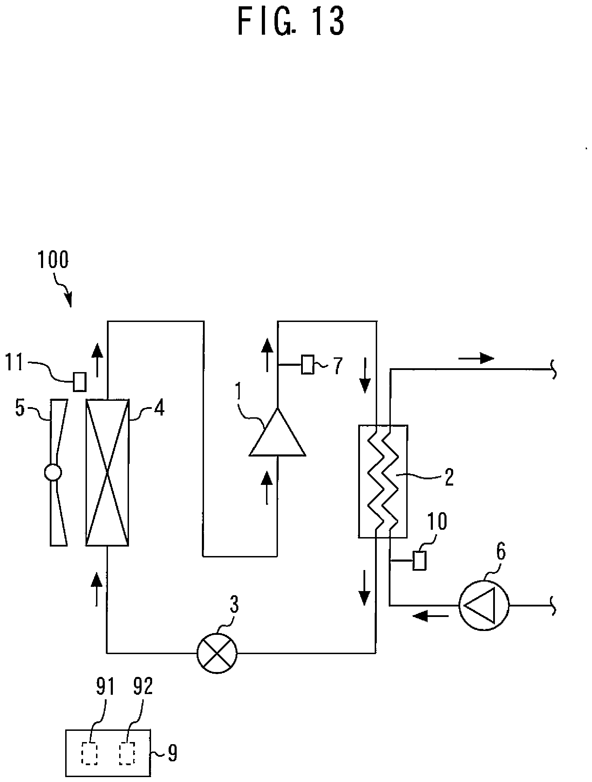

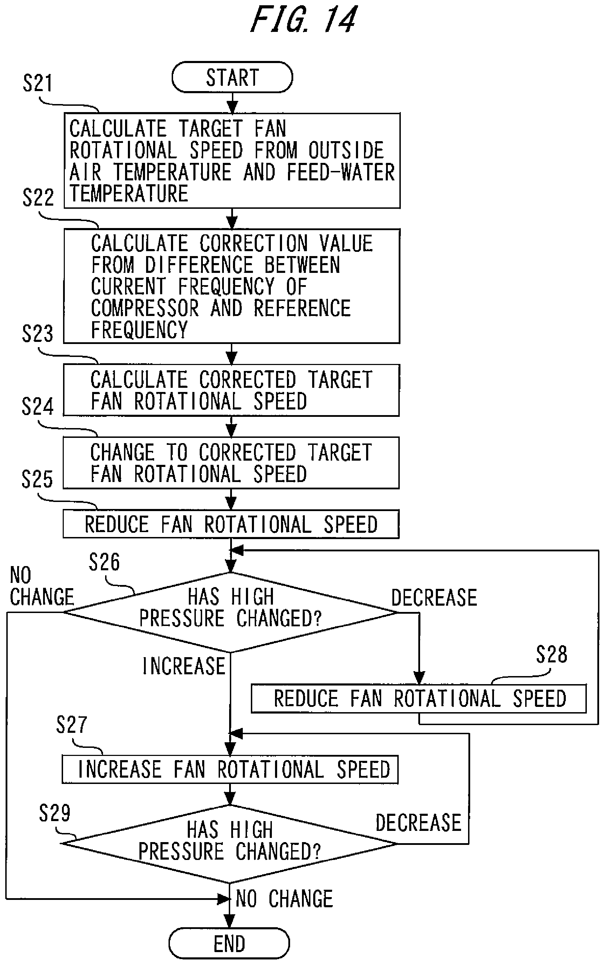

Next, with reference to Figures 13 and 14, embodiment 5 of the present invention will be described. Since this embodiment 5 is an addition of further control to embodiment 3 described above, the addition to embodiment 3 is mainly described, and like or corresponding components are denoted by like reference numerals and descriptions thereof are omitted. Figure 13 is a configuration diagram of a refrigeration cycle device 100 of this embodiment 5. As shown in Figure 13, the refrigeration cycle device 100 of this embodiment 5 includes a high pressure sensor 7 in addition to the configuration in embodiment 3.

A target operating state is an operating state in which high pressure side refrigerant pressure is minimized with respect to a change in low pressure side refrigerant pressure. Changing a fan rotational speed of a blower 5 changes the low pressure side refrigerant pressure. Thus, it can be said that the target operating state is an operating state in which the high pressure side refrigerant pressure is minimized with respect to the change in fan rotational speed of the blower 5.

In this embodiment 5, as in embodiment 3, a controller 9 first performs control so that the fan rotational speed of the blower 5 matches a corrected target fan rotational speed. Then, the controller 9 slightly changes the fan rotational speed of the blower 5, and then checks whether or not the high pressure side refrigerant pressure is minimized with respect to the change in fan rotational speed of the blower 5 by detecting the high pressure side refrigerant pressure with the high pressure sensor 7. Specifically, the controller 9 checks whether or not a current operating state matches the target operating state. If the high pressure side refrigerant pressure is not minimized with respect to the change in fan rotational speed of the blower 5, the controller 9 corrects the fan rotational speed of the blower 5 so that the high pressure side refrigerant pressure is minimized with respect to the change in fan rotational speed of the blower 5. Specifically, if the current operating state does not match the target operating state, the controller 9 corrects the fan rotational speed of the blower 5 so that the actual operating state matches the target operating state.

Figure 14 is a flowchart showing a process of the controller 9 controlling the operation of the blower 5 in this embodiment 5. Processes in steps S21 to S24 in Figure 14 are the same as in Figure 9 of embodiment 3, and thus descriptions thereof are omitted. In this embodiment 5, as shown in Figure 14, after the processes in steps S21 to S24, the controller 9 moves to step S25. In step S25, the controller 9 slightly reduces the fan rotational speed of the blower 5. Then, the controller 9 moves to step S26. In step S26, the controller 9 determines whether or not the high pressure side refrigerant pressure detected by the high pressure sensor 7 has changed between before and after the reduction in fan rotational speed in step S25.

As is apparent from Figure 8, in the target operating state, a gradient of the change in high pressure side refrigerant pressure with respect to the change in low pressure side refrigerant pressure is smaller than in other operating states. Thus, in the target operating state, slightly changing the fan rotational speed of the blower 5 hardly changes the high pressure side refrigerant pressure. If slightly changing the fan rotational speed of the blower 5 hardly changes the high pressure side refrigerant pressure, the current operating state can be assumed to be the target operating state. In this view, in step S26, the controller 9 compares the magnitude of the change in high pressure side refrigerant pressure with a minute reference value previously set, and determines as described below based on a result of the comparison.

(1) If an absolute value of the magnitude of the change in high pressure side refrigerant pressure is not more than the reference value, the controller 9 determines that the high pressure side refrigerant pressure has not changed. In this case, the current operating state can be assumed to be the target operating state, and thus the controller 9 finishes the process in this flowchart.
(2) If the absolute value of the magnitude of the change in high pressure side refrigerant pressure is more than the reference value, and the change in high pressure side refrigerant pressure is positive, the controller 9 determines that the high pressure side refrigerant pressure has increased. In this case, the high pressure side refrigerant pressure increases after the fan rotational speed of the blower 5 is slightly reduced in step S25, and thus it is found that there is a need to make a correction to increase the fan rotational speed of the blower 5 to the contrary. Thus, in this case, the controller 9 moves to step S27, and makes a correction to slightly increase the fan rotational speed of the blower 5.
(3) If the absolute value of the magnitude of the change in high pressure side refrigerant pressure is more than the reference value, and the change in high pressure side refrigerant pressure is negative, the controller 9 determines that the high pressure side refrigerant pressure has decreased. In this case, the high pressure side refrigerant pressure decreases after the fan rotational speed of the blower 5 is slightly reduced in step S25, and thus it is found that there is a need to continuously make a correction to reduce the fan rotational speed of the blower 5. Thus, in this case, the controller 9 moves to step S28, and makes a correction to slightly reduce the fan rotational speed of the blower 5.

After the process in step S27, the controller 9 moves to step S29. In step S29, as in step S26, the controller 9 determines whether or not the high pressure side refrigerant pressure has changed. When determining that the high pressure side refrigerant pressure has decreased, the controller 9 returns to step S27, and makes a correction to further slightly increase the fan rotational speed of the blower 5. In contrast, when determining that the high pressure side refrigerant pressure has not changed, the controller 9 finishes the process in this flowchart because the current operating state is assumed to become the target operating state. As such, the correction in step S27 and the determination in step S29 are repeated until the high pressure side refrigerant pressure no longer changes with respect to the change (increase) in fan rotational speed of the blower 5, thereby allowing the current operating state to reach the target operating state.
When performing the process in step S28, the controller 9 then returns to step S26. In step S26, the controller 9 determines whether or not the high pressure side refrigerant pressure has changed between before and after a reduction in fan rotational speed in step S28 as described above. When determining that the high pressure side refrigerant pressure has decreased, the controller 9 again performs the process in step S28. As such, the correction in step S28 and the determination in step S26 are repeated until the high pressure side refrigerant pressure no longer changes with respect to the change (decrease) in fan rotational speed of the blower 5, thereby allowing the current operating state to reach the target operating state.
As described above, in this embodiment 5, the fan rotational speed of the blower 5 can be corrected so that the high pressure side refrigerant pressure is minimized with respect to the change in fan rotational speed of the blower 5. Thus, according to this embodiment 5, the operating state of the refrigeration cycle device 100 can approach the target operating state with higher accuracy than in embodiment 3.
In step S25 in the flowchart in Figure 14, the controller 9 slightly reduces the fan rotational speed of the blower 5, but may slightly increase the fan rotational speed of the blower 5 to the contrary. In such a case, the controller 9 may slightly reduce the fan rotational speed in step S27, and slightly increase the fan rotational speed in step S28.
In this embodiment 5, when the fan rotational speed of the blower 5 is corrected, the process in step S27 or S28 is repeated, and thus the fan rotational speed of the blower 5 changes in stages. The magnitude of the change in fan rotational speed in steps S27 and S28 corresponds to the magnitude of the change in fan rotational speed for one stage. The gradient of the change in high pressure side refrigerant pressure with respect to the change in low pressure side refrigerant pressure tends to be gentler with decreasing refrigerant compressing capacity of the compressor 1. Thus, the gradient of the change in high pressure side refrigerant pressure with respect to the fan rotational speed of the blower 5 is gentler with decreasing refrigerant compressing capacity of the compressor 1. In this view, the controller 9 may increase the magnitude of the change in fan rotational speed in steps S27 and S28 with decreasing refrigerant compressing capacity of the compressor 1. Thus, even if the refrigerant compressing capacity of the compressor 1 is low, an increase in the number of repetitions of the process in step S27 or S28 can be curbed, thereby reducing the time before the fan rotational speed of the blower 5 returns to normal.

Reference Signs List

| 1 | compressor |
|---|---|
| 2 | high temperature side heat exchanger |
| 3 | expansion valve |
| 4 | low temperature side heat exchanger |
| 5 | blower |
| 6 | pump |
| 7 | high pressure sensor |
| 8 | low pressure sensor |
| 9 | controller |
| 10 | feed-water temperature sensor |
| 11 | outside air temperature sensor |
| 91 | processor |
| 92 | memory |
| 100 | refrigeration cycle device |

**Claims**

1. A refrigeration cycle device (100) comprising:

a compressor (1) configured to compress refrigerant;
a high temperature side heat exchanger (2) configured to exchange heat between the refrigerant compressed by the compressor (1) and a heat medium;
an expansion unit (3) configured to expand the refrigerant having passed through the high temperature side heat exchanger (2);
a low temperature side heat exchanger (4) configured to exchange heat between the refrigerant having passed through the expansion unit (3) and a fluid;
a feeding unit (5) configured to feed the fluid to the low temperature side heat exchanger (4);
control means (9) configured to control an operation of the feeding unit (5) so that an actual operating state approaches a target operating state of a refrigeration cycle, high pressure side refrigerant pressure being refrigerant pressure after compression by the compressor (1), low pressure side refrigerant pressure being refrigerant pressure before compression by the compressor (1), the target operating state being an operating state in which the high pressure side refrigerant pressure is minimized when the low pressure side refrigerant pressure is changed with a refrigerant compressing capacity of the compressor (1) kept constant; and
pressure detection means (7, 8) for detecting the low pressure side refrigerant pressure and the high pressure side refrigerant pressure,
wherein when the low pressure side refrigerant pressure is changed with the refrigerant compressing capacity of the compressor (1) kept constant, there are a range of the low pressure side refrigerant pressure in which the high pressure side refrigerant pressure decreases with decreasing low pressure side refrigerant pressure, and a range of the low pressure side refrigerant pressure in which the high pressure side refrigerant pressure increases with decreasing low pressure side refrigerant pressure, and the high pressure side refrigerant pressure is minimized between the ranges,
the refrigeration cycle device (100) being **characterized in that** information on a plurality of target operating state line connecting points of the low pressure side refrigerant pressure and the high pressure side refrigerant pressure in a plurality of the target operating states that differ depending on the refrigerant compressing capacity of the compressor (1) is stored in the control means (9),
and that the control means (9) is configured to determine whether to increase or reduce a flow rate of the fluid depending on which side of the target operating state line a point represented by current low pressure side refrigerant pressure and current high pressure side refrigerant pressure detected by the pressure detection means (7, 8) is located on.

**2.** The refrigeration cycle device (100) according to claim 1, wherein the refrigerant is carbon dioxide.

**3.** The refrigeration cycle device (100) according to claim 1 or 2, wherein the heat medium is water, and the refrigeration cycle device (100) is suitable to be used as a heat pump hot water supply device.

## Patentansprüche

**1.** Kältekreislaufeinrichtung (100), umfassend:

einen Verdichter (1), der eingerichtet ist, um Kältemittel zu verdichten;
einen hochtemperaturseitigen Wärmetauscher (2), der eingerichtet ist, um Wärme zwischen dem durch den Verdichter (1) verdichteten Kältemittel und einem Wärmemedium auszutauschen;
eine Expansionseinheit (3), die eingerichtet ist, um das Kältemittel, das den hochtemperaturseitigen Wärmetauscher (2) passiert hat, zu entspannen;
einen niedertemperaturseitigen Wärmetauscher (4), der eingerichtet ist, um Wärme zwischen dem Kältemittel, das die Expansionseinheit (3) passiert hat, und einem Fluid auszutauschen;
eine Zuführungseinheit (5), die eingerichtet ist, um das Fluid dem niedertemperaturseitigen Wärmetauscher (4) zuzuführen;
ein Steuermittel (9), das eingerichtet ist, um einen Betrieb der Zuführungseinheit (5) zu steuern, so dass ein tatsächlicher Betriebszustand einen Zielbetriebszustand eines Kältekreislaufs annähert, wobei hochdruckseitiger Kältemitteldruck ein Kältemitteldruck nach Verdichtung durch den Verdichter (1) ist, wobei niederdruckseitiger Kältemitteldruck ein Kältemitteldruck vor Verdichtung durch den Verdichter (1) ist, wobei der Zielbetriebszustand ein Betriebszustand ist, in welchem der hochdruckseitige Kältemitteldruck minimiert wird, wenn der niederdruckseitige Kältemitteldruck mit einer konstant gehaltenen Kältemittelverdichtungskapazität des Verdichters (1) verändert wird; und
ein Druckdetektionsmittel (7, 8) zum Detektieren des niederdruckseitigen Kältemitteldruckes und des hochdruckseitigen Kältemitteldruckes, wobei, wenn der niederdruckseitige Kältemitteldruck mit der konstant gehaltenen Kältemittelverdichtungskapazität des Verdichters (1) verändert wird, es einen Bereich des niederdruckseitigen Kältemitteldruckes gibt, in welchem der hochdruckseitige Kältemitteldruck mit abnehmenden niederdruckseitigen Kältemitteldruck abnimmt, und einen Bereich des niederdruckseitigen Kältemitteldrucks gibt, in welchem das hochdruckseitige Kältemitteldruck mit abnehmenden niederdruckseitigen Kältemitteldruck zunimmt, und der hochdruckseitige Kältemitteldruck zwischen den Bereichen minimiert wird,
wobei die Kältekreislaufeinrichtung (100) **dadurch gekennzeichnet ist, dass** Informationen über eine Vielzahl von Zielbetriebszustandsleitungsverbindungspunkten des niederdruckseitigen Kältemitteldrucks und des hochdruckseitigen Kältemitteldrucks in einer Vielzahl der Zielbetriebszuständen, die sich in Abhängigkeit von der Kältemittelverdichtungskapazität des Verdichters (1) unterscheiden, im Steuermittel (9) gespeichert sind, und dass das Steuermittel (9) eingerichtet ist, um zu bestimmen, ob eine Strömungsrate des Fluids zu erhöhen oder zu reduzieren ist in Abhängigkeit davon, auf welcher Seite der Zielbetriebszustandsleitung sich ein Punkt befindet, der durch den aktuellen niederdruckseitigen Kältemitteldruck und den aktuellen hochdruckseitigen Kältemitteldruck repräsentiert ist, der durch das Druckdetektionsmittel (7, 8) detektiert ist.

**2.** Kältekreislaufeinrichtung (100) nach Anspruch 1, wobei das Kältemittel Kohlenstoffdioxid ist.

**3.** Kältekreislaufeinrichtung (100) nach Anspruch 1 oder 2, wobei das Wärmemedium Wasser ist und die Kältekreislaufeinrichtung (100) geeignet ist, um als Wärmepumpenwarmwasserversorgungseinrichtung eingesetzt zu werden.

## Revendications

**1.** Dispositif de cycle de réfrigération (100) comprenant :

un compresseur (1) configuré de façon à comprimer un fluide frigorigène ;
un échangeur de chaleur du côté température élevée (2) configuré de façon à échanger la chaleur entre le fluide frigorigène comprimé par le compresseur (1), et un milieu thermique ;
une unité de détente (3) configurée de façon à détendre le fluide frigorigène qui est passé à travers l'échangeur de chaleur du côté température élevée (2) ;
un échangeur de chaleur du côté température basse (4) configuré de façon à échanger la chaleur entre le fluide frigorigène qui est passé à travers l'unité de détente (3), et un fluide ;

une unité d'approvisionnement (5) configurée de façon à fournir le fluide à l'échangeur de chaleur du côté température basse (4) ;

des moyens de commande (9) configurés de façon à commander le fonctionnement de l'unité d'approvisionnement (5) de telle sorte que l'état de fonctionnement réel se rapproche d'un état de fonctionnement cible d'un cycle de réfrigération, la pression du fluide frigorigène du côté pression élevée étant la pression du fluide frigorigène après une compression par le compresseur (1), la pression du fluide frigorigène du côté pression basse étant la pression du fluide frigorigène avant une compression par le compresseur (1), l'état de fonctionnement cible étant un état de fonctionnement dans lequel la pression du fluide frigorigène du côté pression élevée est réduite au minimum lorsque la pression du fluide frigorigène du côté pression basse est modifiée avec une capacité de compression du fluide frigorigène du compresseur (1) maintenue constante ; et

des moyens de détection de pression (7, 8) destinés à détecter la pression du fluide frigorigène du côté pression basse, et la pression du fluide frigorigène du côté pression élevée ;

dans lequel, lorsque la pression du fluide frigorigène du côté pression basse est modifiée avec une capacité de compression du fluide frigorigène du compresseur (1) maintenue constante, il y a une plage de pression du fluide frigorigène du côté pression basse dans laquelle la pression du fluide frigorigène du côté pression élevée diminue lorsque la pression du fluide frigorigène du côté pression basse diminue, et une plage de pression du fluide frigorigène du côté pression basse dans laquelle la pression du fluide frigorigène du côté pression élevée augmente lorsque la pression du fluide frigorigène du côté pression basse diminue, et la pression du fluide frigorigène du côté pression élevée est réduite au minimum entre les plages ;

le dispositif de cycle de réfrigération (100) étant **caractérisé en ce que** :

des informations qui se rapportent à une pluralité de points de connexion de lignes d'état de fonctionnement cible de la pression du fluide frigorigène du côté pression basse, et de la pression du fluide frigorigène du côté pression élevée dans une pluralité d'états de fonctionnements cibles qui diffèrent selon la capacité de compression du fluide frigorigène du compresseur (1), sont stockées dans les moyens de commande (9) ; et **en ce que** les moyens de commande (9) sont configurés de façon à déterminer s'il convient d'augmenter ou de réduire le débit du fluide selon le côté de la ligne d'état de fonctionnement cible où se situe un point représenté par la pression du fluide frigorigène du côté pression basse actuelle, et la pression du fluide frigorigène du côté pression élevée actuelle, détectées par les moyens de détection de pression (7, 8).

2.  Dispositif de cycle de réfrigération (100) selon la revendication 1, dans lequel le fluide frigorigène est du dioxyde de carbone.

3.  Dispositif de cycle de réfrigération (100) selon la revendication 1 ou la revendication 2, dans lequel le milieu thermique est l'eau, et le dispositif de cycle de réfrigération (100) convient à une utilisation en tant que dispositif d'approvisionnement en eau chaude de pompe à chaleur.

# FIG. 1

# FIG. 2

# FIG. 3

## FIG. 4

START

S1

CALCULATE TARGET LOW
PRESSURE FROM
RELATIONSHIP BETWEEN
HIGH PRESSURE AND LOW
PRESSURE

S2

CURRENT
LOW PRESSURE
= TARGET LOW
PRESSURE?

NO

S3

INCREASE OR REDUCE
FAN ROTATIONAL SPEED

YES

END

# FIG. 5

# FIG. 6

| | | FEED-WATER TEMPERATURE [°C] | | | | |
|---|---|---|---|---|---|---|
| | | 60 | 55 | 50 | 45 | 40 |
| OUTSIDE AIR TEMPERATURE [°C] | 45 | a1 | a2 | a3 | a4 | a5 |
| | 40 | b1 | b2 | b3 | b4 | b5 |
| | 35 | c1 | c2 | c3 | c4 | c5 |
| | 30 | d1 | d2 | d3 | d4 | d5 |

# FIG. 7

S11

START

CALCULATE TARGET FAN
ROTATIONAL SPEED FROM
OUTSIDE AIR TEMPERATURE
AND FEED-WATER
TEMPERATURE

S12

CHANGE TO TARGET FAN
ROTATIONAL SPEED

END

# FIG. 8

# *FIG. 9*

```
                    ┌─────────────┐
                    │    START    │
                    └──────┬──────┘
                           │
  S21                      ▼
        ┌──────────────────────────────────┐
        │ CALCULATE TARGET FAN             │
        │ ROTATIONAL SPEED FROM            │
        │ OUTSIDE AIR TEMPERATURE AND      │
  S22   │ FEED-WATER TEMPERATURE           │
        └──────────────────┬───────────────┘
                           │
                           ▼
        ┌──────────────────────────────────┐
        │ CALCULATE CORRECTION VALUE       │
        │ FROM DIFFERENCE BETWEEN          │
        │ CURRENT FREQUENCY OF             │
        │ COMPRESSOR AND REFERENCE         │
  S23   │ FREQUENCY                        │
        └──────────────────┬───────────────┘
                           │
                           ▼
        ┌──────────────────────────────────┐
        │ CALCULATE CORRECTED TARGET       │
  S24   │ FAN ROTATIONAL SPEED             │
        └──────────────────┬───────────────┘
                           │
                           ▼
        ┌──────────────────────────────────┐
        │ CHANGE TO CORRECTED TARGET       │
        │ FAN ROTATIONAL SPEED             │
        └──────────────────┬───────────────┘
                           │
                           ▼
                    ┌─────────────┐
                    │     END     │
                    └─────────────┘
```

# FIG. 10

# FIG. 11

| | | FEED-WATER TEMPERATURE [°C] | | | | |
|---|---|---|---|---|---|---|
| | | 60 | 55 | 50 | 45 | 40 |
| OUTSIDE AIR TEMPERATURE [°C] | 45 | q1 | q2 | q3 | q4 | q5 |
| | 40 | r1 | r2 | r3 | r4 | r5 |
| | 35 | s1 | s2 | s3 | s4 | s5 |
| | 30 | t1 | t2 | t3 | t4 | t5 |

# FIG. 12

START

CALCULATE TARGET FAN
ROTATIONAL SPEED AND
TARGET LOW PRESSURE FROM
OUTSIDE AIR TEMPERATURE
AND FEED-WATER
TEMPERATURE ⎯ S31

CALCULATE CORRECTION
VALUE FROM DIFFERENCE
BETWEEN CURRENT FREQUENCY
OF COMPRESSOR AND
REFERENCE FREQUENCY ⎯ S32

CALCULATE CORRECTED
TARGET FAN ROTATIONAL
SPEED AND CORRECTED
TARGET LOW PRESSURE ⎯ S33

CHANGE TO CORRECTED
TARGET FAN ROTATIONAL
SPEED ⎯ S34

S35
CURRENT
LOW PRESSURE =
CORRECTED TARGET LOW
PRESSURE? ⎯ NO

YES

S36
CURRENT
LOW PRESSURE >
CORRECTED TARGET LOW
PRESSURE? ⎯ NO

YES

S37
REDUCE FAN ROTATIONAL
SPEED

S38
INCREASE FAN ROTATIONAL
SPEED

END

# FIG. 13

# FIG. 14

START

S21 CALCULATE TARGET FAN ROTATIONAL SPEED FROM OUTSIDE AIR TEMPERATURE AND FEED-WATER TEMPERATURE

S22 CALCULATE CORRECTION VALUE FROM DIFFERENCE BETWEEN CURRENT FREQUENCY OF COMPRESSOR AND REFERENCE FREQUENCY

S23 CALCULATE CORRECTED TARGET FAN ROTATIONAL SPEED

S24 CHANGE TO CORRECTED TARGET FAN ROTATIONAL SPEED

S25 REDUCE FAN ROTATIONAL SPEED

S26 HAS HIGH PRESSURE CHANGED?

NO CHANGE

DECREASE

INCREASE

S28 REDUCE FAN ROTATIONAL SPEED

S27 INCREASE FAN ROTATIONAL SPEED

S29 HAS HIGH PRESSURE CHANGED?

DECREASE

NO CHANGE

END

29

**EP 3 051 224 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007155157 A
- JP 2008304134 A
- JP 2005127588 A
- JP 2003222396 A
- JP 2009008308 A
- JP 2010169350 A
- JP 2012184858 A